# EUROPEAN PATENT APPLICATION

(11) **EP 4 832 332 A1**
(43) Date of publication of application: **28.10.2026**
(21) Application number: 23962206.1
(22) Date of filing: 20.12.2023
(51) Int. Cl.: H02M 7/48

(54) **INVERTER DEVICE AND REFRIGERATION CYCLE DEVICE**

(71) Applicant: Carrier Japan Corporation, Tokyo 141-0032 (JP)
(72) Inventor: OZEKI, Kazuma, Fuji-shi, Shizuoka 416-8521 (JP)
(74) Representative: Dehns
(86) International application number: PCT/JP2023/045765
(87) International publication number: WO 2025/134285

(57) **Abstract**

An inverter device includes a switching circuit and a controller. The switching circuit includes a plurality of series circuits each including a switch element on an upstream side and a switch element on a downstream side along an application direction of a DC voltage, the respective phase windings of a motor being connected to interconnection points of the switch elements of the respective series circuits. The controller sequentially forms a plurality of conduction paths through which currents flow in predetermined directions in the respective phase windings through the respective switch elements, detects, for each formation, a value of a phase current flowing between the switching circuit and the respective phase windings, and determines an abnormality of the motor and an abnormality of the respective switch elements based on a ratio between a maximum value and a minimum value among the values of the phase currents detected in the phase check operations.

## Description

### Technical Field

Embodiments of the present invention relate to an inverter device connected to a motor having a plurality of phase windings and configured to output driving power to the motor, and to a refrigeration cycle apparatus using the inverter device.

### Background Art

An inverter device connected to a motor having a plurality of phase windings and configured to output driving power to the motor includes a switching circuit that converts a DC voltage into an AC voltage of a predetermined frequency by switching. The switching circuit includes a plurality of series circuits, each series circuit including a switch element located on an upstream side and a switch element located on a downstream side along an application direction of a DC voltage. An interconnection point of the switch elements in each series circuit is connected to corresponding phase winding of the motor.

### Citation List

### Patent Literatures

Patent Literature 1: JP 2019-187187 A
Patent Literature 2: WO 2023-181306 A

### Summary of Invention

### Technical Problem

When an abnormality occurs in the motor, for example when insulation failure occurs in any of the phase windings, or when any of the switch elements of the switching circuit cannot be turned on despite issuance of a turn-on command (a so-called open failure), proper driving of the motor is not possible. Patent Literature 1 and Patent Literature 2 disclose examples of methods for detecting such abnormalities. For example, the abnormality detection method disclosed in Patent Literature 2 detects phase currents flowing through the respective phase windings of the motor and determines the presence or absence of an abnormality based on whether the detected phase currents fall within an appropriate range. A motor having different specifications exhibits different normal current values. This difference makes setting of the appropriate range difficult. Unlike Patent Literature 2, which detects each phase current individually, another example provides a single shunt resistor in a DC path of the switching circuit and detects the phase currents through the shunt resistor. This example involves a problem that detection at one timing yields only one phase current, which lowers current detection accuracy and makes determination between normal and abnormal conditions more difficult.

An object of the embodiment of the present invention is to provide an inverter device capable of accurately and rapidly detecting abnormalities in a motor and abnormalities in respective switch elements.

### Solution to Problem

According to one embodiment, an inverter device is connected to a motor having a plurality of phase windings and includes a switching circuit which includes a plurality of series circuits each including a switch element on an upstream side and a switch element on a downstream side along an application direction of a DC voltage and in which the respective phase windings are connected to interconnection points of the switch elements in the series circuits, and a controller configured to control the switching circuit. The controller sequentially forms a plurality of conduction paths through which currents flow in predetermined directions in the respective phase windings via the respective switch elements, executes, for each formation of each conduction path, a phase check operation that detects a value of a phase current flowing between the switching circuit and the respective phase windings, and determines an abnormality of the motor and an abnormality of the respective switch elements based on a ratio between a maximum value and a minimum value among the phase current values detected in the phase check operations.

### Brief Description of Drawings

FIG. 1 is a block diagram showing a circuit configuration of an inverter device according to one embodiment.
FIG. 2 is a flowchart showing control contents in the controller of the embodiment.
FIG. 3 shows switching patterns in respective phase check operations together with presence or absence of phase currents in the embodiment.
FIG. 4 shows current during a W-phase check operation in the embodiment.
FIG. 5 shows current during a V-phase check operation in the embodiment.
FIG. 6 shows current during a U-phase check operation in the embodiment.
FIG. 7 shows current during an X-phase check operation in the embodiment.
FIG. 8 shows current during a Z-phase check operation in the embodiment.
FIG. 9 shows current during a Y-phase check operation in the embodiment.
FIG. 10 shows phase current values in the respective phase check operations when a short-circuit failure occurs in any phase winding of the motor in the embodiment.
FIG. 11 shows phase current values in respective phase check operations when an open failure occurs in any switch element in the embodiment.
FIG. 12 shows a configuration of a refrigeration cycle equipped with the inverter device of the embodiment.

### Mode for Carrying Out the Invention

An embodiment of the present invention will be described hereinafter with reference to the accompanying drawings.

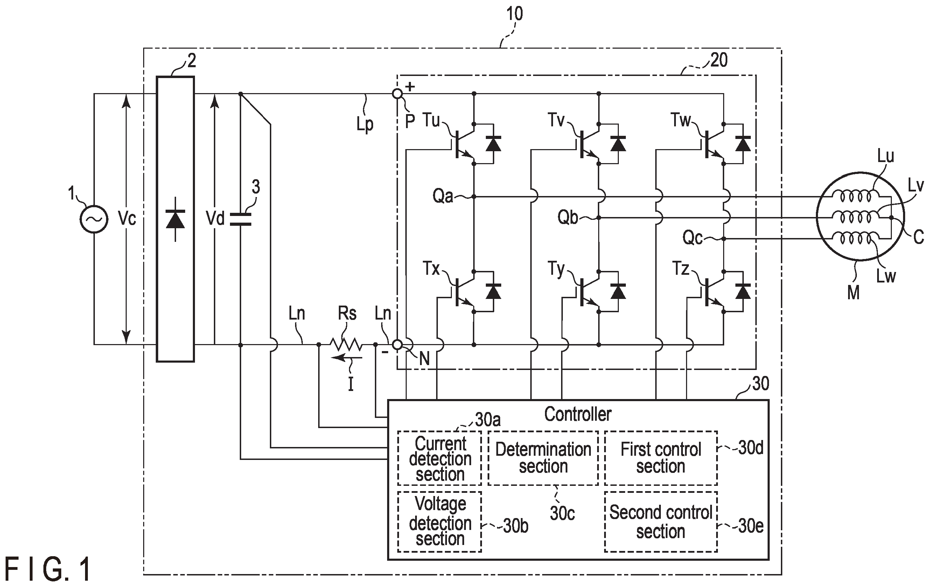

As shown in FIG. 1, an inverter device 10 of the present embodiment is connected to an AC power supply 1. The inverter device 10 includes a full-wave rectifier circuit (rectifier circuit) 2 including a diode bridge that full-wave rectifies an AC voltage Vc of the AC power supply 1. The inverter device 10 further includes a smoothing capacitor 3 that smooths a DC voltage Vd output from the full-wave rectifier circuit 2. The inverter device 10 further includes a switching circuit 20 that converts a DC voltage Vd of the smoothing capacitor 3 into a three-phase AC voltage of a predetermined frequency by switching. The inverter device 10 further includes a shunt resistor Rs for current detection inserted in series in, for example, a negative-side DC conduction path Ln among a positive-side DC conduction path Lp and the negative-side DC conduction path Ln inserted between the switching circuit 20 and the smoothing capacitor 3. The inverter device 10 further includes a controller 30 that controls switching of the switching circuit 20. The shunt resistor Rs may be provided on the positive-side DC conduction path Lp instead of negative-side DC conduction path Ln.

An output voltage of the switching circuit 20 is applied to a brushless DC motor (hereinafter referred to as a motor) M as driving power. The full-wave rectifier circuit 2 and the smoothing capacitor 3 configure a DC circuit that converts the AC voltage Vc into the DC voltage Vd and applies this DC voltage Vd to the switching circuit 20.

The motor M serves as, for example, a compressor motor mounted in an air conditioner. The motor M includes a stator having three phase windings Lu, Lv, and Lw connected in a star connection around a neutral point C, and a rotor having permanent magnets. Non-connected ends of the phase windings Lu, Lv, and Lw are connected to output terminals of the switching circuit 20. Interaction between a magnetic field generated by currents flowing through the phase windings Lu, Lv, and Lw and a magnetic field generated by the permanent magnets rotates the rotor. A connection of the respective phase windings Lu, Lv, and Lw is not limited to the star connection. A Δ connection may replace the star connection.

The switching circuit 20, which is a three-phase inverter circuit, includes input terminals P and N to which the DC voltage Vd of the smoothing capacitor 3 is applied through the positive-side DC conduction path Lp and the negative-side DC conduction path Ln, a first series circuit connected to the input terminals P and N and including a switch element Tu on the upstream side and a switch element Tx on the downstream side along an application direction of the DC voltage Vd, a second series circuit connected to the input terminals P and N and including a switch element Tv on the upstream side and a switch element Ty on the downstream side along the application direction of the DC voltage Vd, and a third series circuit connected to the input terminals P and N and including a switch element Tw on the upstream side and a switch element Tz on the downstream side along the application direction of the DC voltage Vd.

A non-connected end of the phase winding Lu is connected to an interconnection point (an output terminal) Qa of the switch elements Tu and Tx in the first series circuit. A non-connected end of the phase winding Lv is connected to an interconnection point (an output terminal) Qb of the switch elements Tv and Ty in the second series circuit. A non-connected end of the phase winding Lw is connected to an interconnection point (an output terminal) Qc of the switch elements Tw and Tz in the third series circuit.

Both ends of the shunt resistor Rs are connected to the controller 30. Both ends of the smoothing capacitor 3 also are connected to the controller 30.

The controller 30 includes a current detection section 30a that detects the phase currents Iu, Iv, Iw, Ix, Iy, and Iz flowing through the phase windings Lu, Lv, and Lw based on a voltage generated across the shunt resistor Rs. The controller 30 further includes a voltage detection section 30b that detects an AC voltage Vc of the AC power supply 1 based on a DC voltage Vd of the smoothing capacitor 3. The controller 30 further includes a determination section 30c that determines an abnormality of the motor M and an abnormality of the switch elements Tu to Tz of the switching circuit 20 based on detection results of the current detection section 30a. The controller 30 further includes a first control section 30d that controls starting and stopping of the motor M according to a determination result of the determination section 30c and according to an external command. The controller 30 further includes a second control section 30e that estimates a rotational speed of the motor M based on detection results of the current detection section 30a and controls switching of the switch elements Tu to Tz so that the rotational speed becomes a target rotational speed according to an external command. The phase currents Iu, Iv, Iw, Ix, Iy, and Iz represent currents flowing through the respective switch elements Tu, Tv, Tw, Tx, Ty, and Tz of the switching circuit 20 during respective phase check operations described below.

The determination section 30c sequentially forms a plurality of conduction paths (a first conduction path to a sixth conduction path) by turning on predetermined plural switch elements among the switch elements Tu to Tz such that currents flow in predetermined directions in the phase windings Lu, Lv, and Lw. For each formation of each conduction path, the determination section 30c executes U-phase check operations to Z-phase check operations and sequentially detects, through the current detection section 30a, values of the phase currents Iu, Iv, Iw, Ix, Iy, and Iz flowing between the switching circuit 20 and the motor M. The single shunt resistor Rs detects the phase currents Iu to Iz. Thus, the determination section 30c yields one phase current at each timing for the first to sixth electrical path. The determination section 30c selects a maximum value Imax and a minimum value Imin among the detected phase currents Iu to Iz and determines an abnormality of the motor M and an abnormality of the switch elements Tu to Tz based on a ratio α (= Imax / Imin) between the selected maximum value Imax and the selected minimum value Imin.

The first control section 30d causes the determination section 30c to execute the determination before startup of the motor M, starts the motor M when a result of the determination indicates no abnormality, and inhibits startup of the motor M and issues a notification of the abnormality when the result of the determination indicates the presence of an abnormality.

During the determination process performed by the determination section 30c, the second control section 30e variably sets a predetermined period t, which defines an on-period of the switch elements during each phase check operation, according to a value of the AC voltage Vc detected by voltage detection section 30b. More specifically, to stabilize the respective phase current in the normal state in each phase check operation regardless of fluctuation of the AC voltage Vc, when the AC voltage Vc exceeds a predetermined reference value, the second control section 30e shortens the predetermined period t by Δt1 and when the AC voltage Vc falls below the reference value, the second control section 30e lengthens the predetermined period t by Δt1.

This adjustment of the predetermined period t according to the AC voltage Vc enables proper determination by the determination section 30c regardless of the fluctuation of the AC voltage Vc. Further, this adjustment can prevent destruction of the switch elements Tu to Tz due to overcurrent when the AC voltage Vc rises.

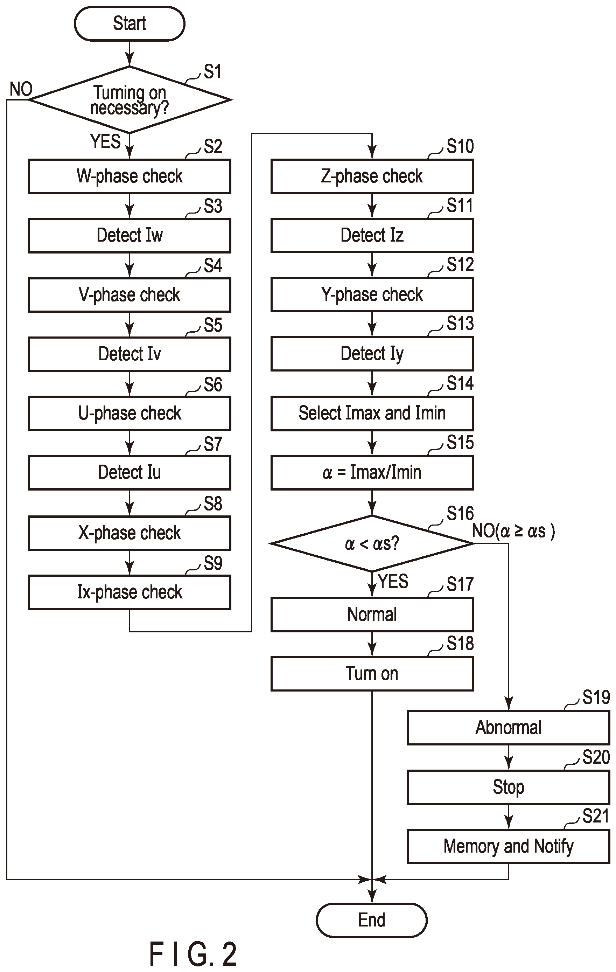

The following will describe control performed by the controller 30 with reference to the flowchart in FIG. 2.

### (W-phase check operation)

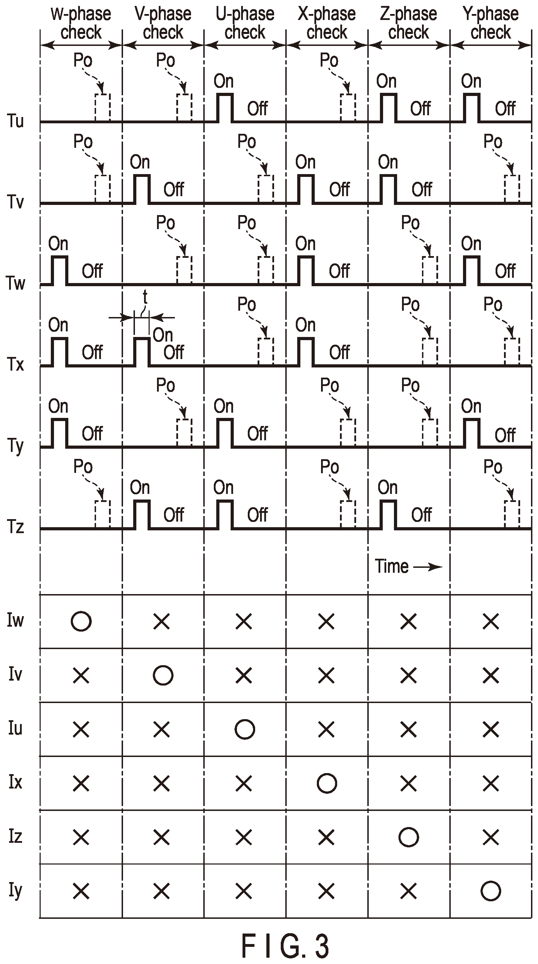

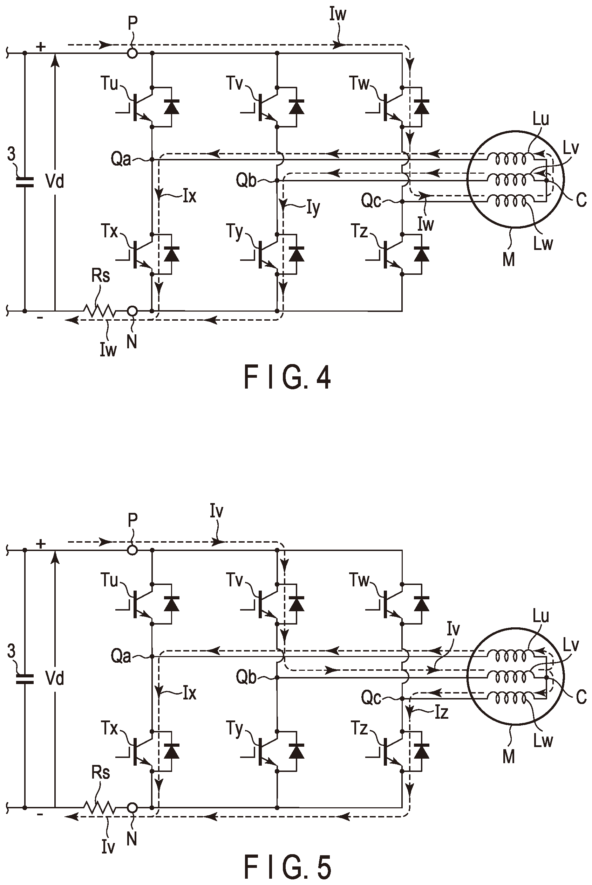

Upon a startup request of the motor M (YES in S1), the controller 30 executes the W-phase check operation prior to the startup (S2). Specifically, the controller 30 supplies a pulse-shaped gate signal that turns on the switching elements Tw, Tx, and Ty for the predetermined period t while maintaining the switching elements Tu, Tv, and Tz in the off state, as shown in FIG. 3. This control sets a first conduction path for the W-phase check in which current flows, as indicated by the broken line and arrows in FIG. 4, from the positive terminal of the smoothing capacitor 3 through the positive-side DC conduction path Lp, the positive terminal P, the switching element Tw, the interconnection point Qc, the phase winding Lw, the phase windings Lu and Lv, the interconnection points Qa and Qb, the switching elements Tx and Ty, the negative terminal N, the negative-side DC conduction path Ln, and the shunt resistor Rs to the negative terminal of the smoothing capacitor 3. In association with this setting, the controller 30 adjusts the predetermined period t, which is the on-period of the switching elements Tw, Tx, and Ty, in accordance with a value of the AC voltage Vc (or a value of the DC voltage Vd obtained by rectifying the AC voltage Vc) such that the first conduction path phase current Iw, that is, the current flowing through the switching element Tw, is stabilized regardless of fluctuation of the AC voltage Vc.

The controller 30 detects the phase current Iw based on a voltage across the shunt resistor Rs and stores the detection result in an internal memory (S3).

### (V-phase check operation)

The controller 30 executes the V-phase check operation (S4) followed by the W-phase check operation. Specifically, the controller 30 supplies a pulse-shaped gate signal that turns on the switching elements Tv, Tx, and Tz for the predetermined period t while maintaining the switching elements Tu, Tw, and Ty in the off state, as shown in FIG. 3. This control sets a second conduction path for the V-phase check in which current flows, as indicated by the broken line and arrows in FIG. 5, from the positive terminal of the smoothing capacitor 3 through the positive-side DC conduction path Lp, the positive terminal P, the switching element Tv, the interconnection point Qb, the phase winding Lv, the phase windings Lu and Lw, the interconnection points Qa and Qc, the switching elements Tx and Tz, the negative terminal N, the negative-side DC conduction path Ln, and the shunt resistor Rs to the negative terminal of the smoothing capacitor 3. In this operation as well, the controller 30 adjusts the predetermined period t, which is the on-period of the switch elements Tv, Tx, and Tz, in accordance with the value of the AC voltage Vc.

The controller 30 detects the phase current Iv of the second conduction path based on a voltage across the shunt resistor Rs and stores the detection result in the internal memory (S5).

### (U-phase check operation)

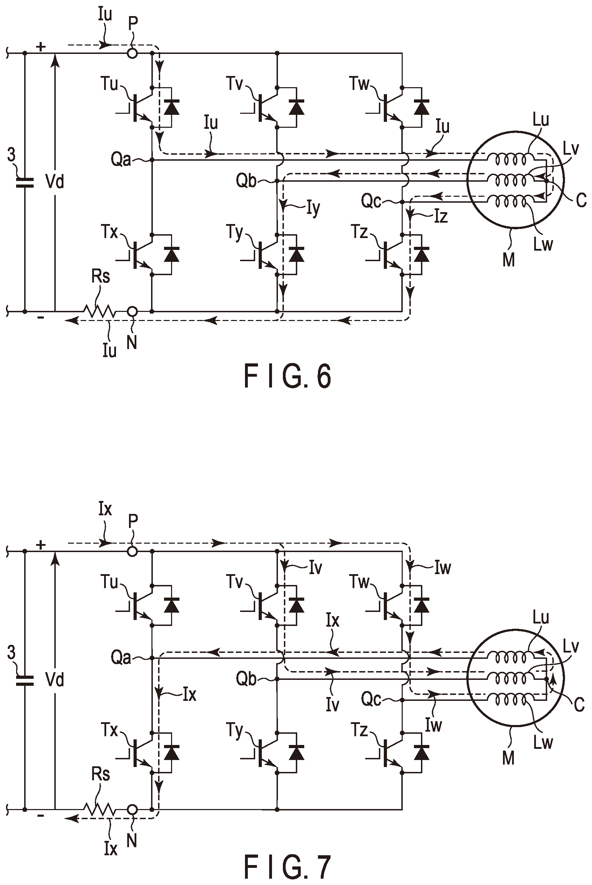

The controller 30 executes the U-phase check operation (S6) followed by the V-phase check operation. Specifically, the controller 30 supplies a pulse-shaped gate signal that turns on the switching elements Tu, Ty, and Tz for a predetermined period t while maintaining the switching elements Tv, Tw, and Tx in the off state, as shown in FIG. 3. This control sets a third conduction path for the U-phase check in which current flows, as indicated by the broken line and arrows in FIG. 6, from the positive terminal of the smoothing capacitor 3 through the positive-side DC conduction path Lp, the positive terminal P, the positive-side DC conduction path Lp switching element Tu, the interconnection point Qa, the phase winding Lu, the phase windings Lv and Lw, the interconnection points Qb and Qc, the switching elements Ty and Tz, the negative terminal N, the negative-side DC conduction path Ln, and the shunt resistor Rs to the negative terminal of the smoothing capacitor 3. The controller 30 adjusts the predetermined period t, which is the on-period of the switch elements Tu, Ty, and Tz, in accordance with the value of the AC voltage Vc.

The controller 30 detects the phase current Iu in the third conduction path based on the voltage across the shunt resistor Rs and stores the detection result in the internal memory (S7).

### (X-Phase Check Operation)

After completion of the U-phase check operation, the controller 30 executes an X-phase check operation (S8). Specifically, the controller 30 supplies a pulse-shaped gate signal that turns on the switching elements Tv, Tw, and Tx for a predetermined period t while maintaining the switching elements Tu, Ty, and Tz in the off state, as shown in FIG. 3. This control sets a fourth conduction path in which current flows, as indicated by the broken line and arrows in FIG. 7, from the positive terminal of the smoothing capacitor 3 through the positive-side DC conduction path Lp, the positive terminal P, the switching elements Tv and Tw, the interconnection points Qb and Qc, the phase windings Lv and Lw, the phase winding Lu, the interconnection point Qa, the switching element Tx, the negative terminal N, the negative-side DC conduction path Ln, and the shunt resistor Rs to the negative terminal of the smoothing capacitor 3. In association with this setting, the controller 30 adjusts the predetermined period t, which is the on-period of the switch elements Tv, Tw, and Tx, in accordance with the value of the AC voltage Vc.

The controller 30 detects the phase current Ix of the fourth conduction path based on a voltage across the shunt resistor Rs and stores the detection result in the internal memory (S9).

### (Z-phase check operation)

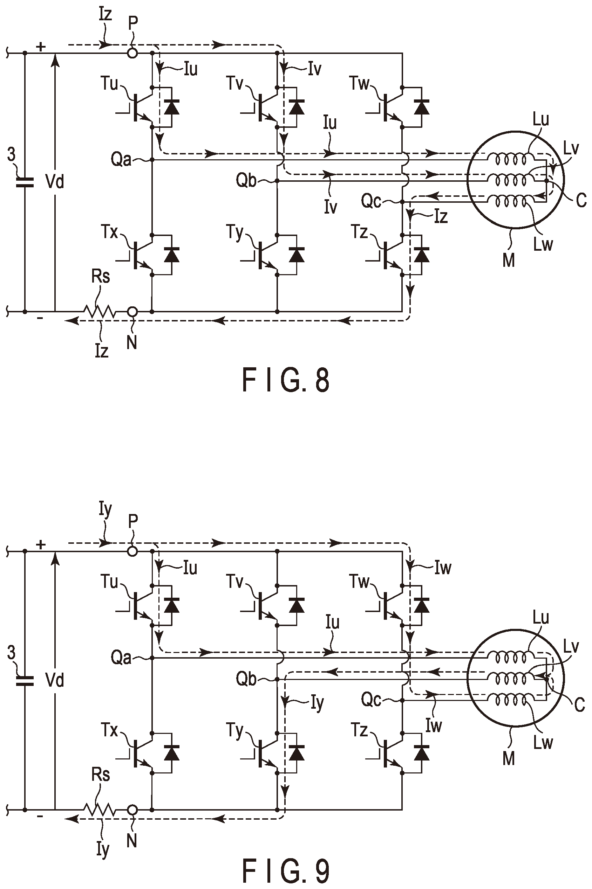

After completion of the X-phase check operation, the controller 30 executes a Z-phase check operation (S10). Specifically, the controller 30 supplies a pulse-shaped gate signal that turns on the switching elements Tu, Tv, and Tz for a predetermined period t while maintaining the switching elements Tw, Tx, and Ty in the off state, as shown in FIG. 3. This control sets a fifth conduction path in which current flows, as indicated by the broken line and arrows in FIG. 8, from the positive terminal of the smoothing capacitor 3 through the positive-side DC conduction path Lp, the positive terminal P, the switching elements Tu and Tv, the interconnection points Qa and Qb, the phase windings Lu and Lv, the phase winding Lw, the interconnection point Qc, the switching element Tz, the negative terminal N, the negative-side DC conduction path Ln, and the shunt resistor Rs to the negative terminal of the smoothing capacitor 3. In association with this setting, the controller 30 adjusts the predetermined period t, which is the on-period of the switch elements Tu, Tv, and Tz, in accordance with the value of the AC voltage Vc.

The controller 30 detects the phase current Iz of the fifth conduction path based on a voltage across the shunt resistor Rs and stores the detection result in the internal memory (S11).

### (Y-phase check operation)

After completion of the Z-phase check operation, the controller 30 executes a Y-phase check operation (S12). Specifically, the controller 30 supplies a pulse-shaped gate signal that turns on the switching elements Tu, Tw, and Ty for a predetermined period t while maintaining the switching elements Tv, Tx, and Tz in the off state, as shown in FIG. 3. This control sets a sixth conduction path in which current flows, as indicated by the broken line and arrows in FIG. 9, from the positive terminal of the smoothing capacitor 3 through the positive-side DC conduction path Lp, the positive terminal P, the switching elements Tu and Tw, the interconnection points Qa and Qc, the phase windings Lu and Lw, the phase winding Lv, the interconnection point Qb, the switching element Ty, the negative terminal N, the negative-side DC conduction path Ln, and the shunt resistor Rs to the negative terminal of the smoothing capacitor 3. In association with this setting, the controller 30 adjusts the predetermined period t, which is the on-period of the switch elements Tu, Tw, and Ty, in accordance with the value of the AC voltage Vc.

The controller 30 detects the phase current Iy of the sixth conduction path based on a voltage across the shunt resistor Rs and stores the detection result in the internal memory (S13).

### (Determination of Abnormality)

After completion of the Y-phase check operation, the controller 30 selects the maximum value Imax and the minimum value Imin among the six phase currents Iu, Iv, Iw, Ix, Iy, and Iz stored in the internal memory (S14). The controller 30 calculates a ratio α (= Imax / Imin) between the selected maximum value Imax and the selected minimum value Imin (S15) and determines whether the obtained α is less than a threshold αs (α < αs) (S16).

When the ratio α is less than the threshold αs (YES in S16), the controller 30 determines that the motor M and the switch elements Tu to Tz operate normally (S17) and starts the motor M (S18).

When the ratio α is greater than or equal to the threshold αs (NO in S16), the controller 30 determines that an abnormality exists in the motor M or the switch elements Tu to Tz (S19), does not start the motor M, and maintains the stopped state (S20). The controller 30 stores information indicating the abnormality in the internal memory and notifies an external maintenance person through display indication or network communication (S21).

Normal current values differ according to specifications of the motor M. A large-capacity motor M produces generally larger phase current values Iu to Iz, whereas a small-capacity motor M produces generally smaller phase current values Iu to Iz. Differences in specifications of the motor M make it difficult to determine an abnormality using the same phase current value as a threshold. Even when specifications of the motor M are identical, manufacturing variations in the phase windings and differences in a stopping position of the rotor during each phase check operation, more precisely differences in a position of magnets provided in the rotor, cause variations in the phase current values. These factors indicate that use of a ratio α (= Imax / Imin) between a maximum value Imax and a minimum value Imin of the phase current values as an index for abnormality determination is preferable. That is, regardless of specifications of the motor M and various variations, under a normal condition of the motor M and the switching circuit 20, the ratio α (= Imax / Imin) between the maximum value Imax and the minimum value Imin of each phase current remains in a low range near 1. In contrast, when an abnormality occurs, the ratio α (= Imax / Imin) between the maximum value Imax and the minimum value Imin of each phase current becomes large. Use of the ratio α between the maximum value Imax and the minimum value Imin of each phase current as an index for abnormality determination greatly simplifies setting of the threshold αs. Even when specifications of the motor M differ, the same threshold, for example 2, can be used.

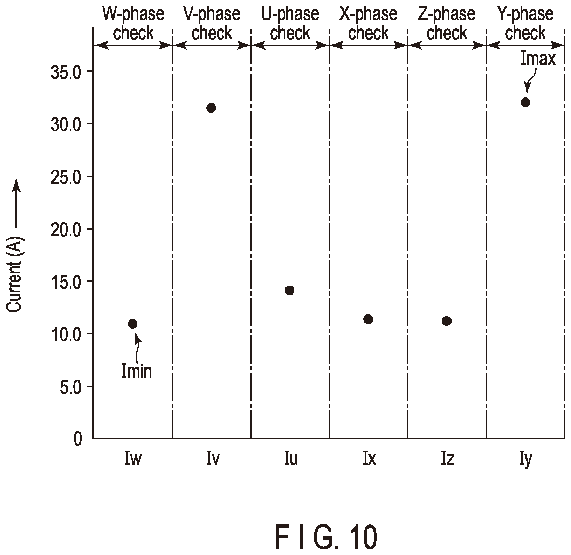

When a short-circuit failure occurs in the phase winding Lv of the motor M, that is, when current leakage from the phase winding Lv occurs, the phase current Iv and the phase current Iy increase significantly, respectively, during a V-phase check operation (FIG. 5) in which the phase current Iv flows into the phase winding Lv and a current branching from the phase current Iv flows into the phase windings Lu and Lw, and during a Y-phase check operation (FIG. 9) in which the phase current Iy branches into the phase windings Lu and Lw and a current flowing through the phase windings Lu and Lw merges and flows into the phase winding Lv, as shown in FIG. 10.

In this case, the controller 30 selects, as the maximum value Imax, approximately 32 A, which is a value of the larger one of the significantly increased phase currents Iv and Iy, and selects, as the minimum value Imin, 11 A, which is a value of the smallest phase current Iw (S14). The controller 30 calculates the ratio α (= Imax / Imin = 32 / 11 = 2.91) between the maximum value Imax and the minimum value Imin (S15). The ratio α becomes greater than or equal to the threshold αs (= 2).

When the calculated ratio α is greater than or equal to the threshold αs (NO in S16), the controller 30 determines that a short-circuit failure exists in one of the phase windings Lu, Lv, and Lw (S19), refrains from starting the motor M and maintains the motor M in the stopped state (S20), and stores, in an internal memory, information indicating that one of the phase windings Lu, Lv, and Lw has a short-circuit failure and notifies external maintenance personnel of the short-circuit failure through display notification or network communication (S21).

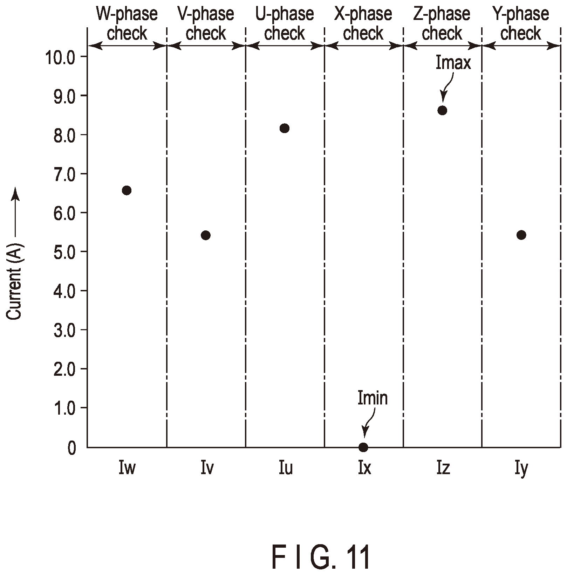

When an open failure occurs in the switch element Tx of the switching circuit 20, that is, when the switch element Tx cannot be turned on, among the phase current Iw during the W-phase check operation (FIG. 4) in which the first conduction path is formed by turning on the switch elements Tw, Tx, and Ty, the phase current Iv during the V-phase check operation (FIG. 5) in which the second conduction path is formed by turning on the switch elements Tv, Tx, and Tz, and the phase current Ix during an X-phase check operation (FIG. 7) in which the fourth conduction path is formed by turning on the switch elements Tv, Tw, and Tx, only the phase current Ix of the fourth conduction path, in which energization is completely cut off, becomes 0 as shown in FIG. 11.

Subsequently, the controller 30 selects the phase current Iz as the maximum value Imax and selects the phase current Ix as the minimum value Imin (S14), and calculates the ratio α (= Imax / Imin) between the maximum value Imax and the minimum value Imin (S15). In this case, the minimum value Imin is 0. Accordingly, the ratio α becomes infinite.

When the calculated ratio α is infinite and thus greater than αs (= 2) (NO in S16), the controller 30 determines that an abnormality exists (S19) and refrains from starting the motor M and maintains the motor M in a stopped state (S20). Then, based on the calculated ratio α being infinite, the controller 30 determines, as a cause of the abnormality, that the switch element Tx corresponding to the phase current Ix having the minimum value Imin = 0 has an open failure, stores the determination in an internal memory, and notifies external maintenance personnel of the abnormality through display notification or network communication (S21).

As described above, the controller 30 sequentially forms a plurality of conduction paths (the first conduction path to the sixth conduction path) by turning on predetermined switch elements among the switch elements Tu to Tz of the switching circuit 20, the conduction paths allowing currents to flow in predetermined directions in the phase windings Lu, Lv, and Lw. For each formation of each conduction path, the controller 30 executes the U-phase check operation to the Z-phase check operation to sequentially detect values of phase currents Iw, Iv, Iu, Ix, Iz, and Iy flowing between the switching circuit 20 and the motor M. The controller 30 selects the maximum value Imax and the minimum value Imin among the values of the phase currents Iw to Iy detected in these check operations and determines an abnormality of the switch elements Tu to Tz and an abnormality of the motor M based on the ratio α (= Imax / Imin) between the selected maximum value Imax and the selected minimum value Imin, thereby accurately and rapidly detecting the abnormality of the switch elements Tu to Tz and the abnormality of the motor M. Regarding the respective phase check operations, in the U-phase, V-phase, and W-phase check operations, the first to third conduction paths are formed in which current divides from one phase winding into two phase windings, and in the X-phase, Y-phase, and Z-phase check operations, the fourth to sixth conduction paths are formed in which current merges from two phase windings into one phase winding.

Furthermore, variably setting the predetermined period t, which is the on-period of each switch element during each phase check operation, according to a value of the AC voltage Vc enables accurate detection of phase currents Iw, Iv, Iu, Ix, Iz, and Iy during each phase check operation regardless of fluctuation of the AC voltage Vc.

Detection of phase currents during each phase check operation based on a voltage generated across a single shunt resistor Rs provided in the negative-side conduction path Ln in the switching circuit 20 reduces cost as compared with providing a current sensor for each of the phase windings Lu, Lv, and Lw. Even when, as in a conventional configuration, a current sensor is provided for each phase winding such that phase currents of three phases are always detectable, a method in which the maximum value Imax and the minimum value Imin are selected from among values of the phase currents Iu to Iz detected in a series of phase check operations and an abnormality of switch elements Tu to Tz and an abnormality of motor M are determined based on the ratio α (= Imax / Imin) between the selected maximum value Imax and the selected minimum value Imin remains effective.

### [Modified Example]

A modification may include a configuration in which, as also described in Patent Document 2 mentioned above, during a W-phase check operation in which the switch elements Tw, Tx, and Ty are turned on for the predetermined period t while maintaining the switch elements Tu, Tv, and Tz in an off state, after completion of turning on of the switch elements Tw, Tx, and Ty, a pulse-shaped gate signal Po is supplied to turn on the switch elements Tu, Tv, and Tz, which have been in the off state, for a period substantially equal to the predetermined period t, as indicated by broken lines in FIG. 3, thereby applying a reverse-phase voltage for canceling a current that flowed between the switching circuit and the motor M by initial turning on of the switch elements Tw, Tx, and Ty to the phase windings Lu, Lv, and Lw.

In this manner, application of the reverse-phase voltage before moving to the next V-phase check operation rapidly attenuates the phase current Iw during the W-phase check operation and prevents the phase current Iw from affecting the phase current Iv during the next V-phase check operation. As a result, the configuration can accurately detect phase current Iv during the next V-phase check operation.

Similarly, a modification may include a configuration in which, during a V-phase check operation in which the switch elements Tv, Tx, and Tz are turned on for a predetermined period t while maintaining the switch elements Tu, Tw, and Ty in an off state, after completion of turning on of the switch elements Tv, Tx, and Tz, a pulse-shaped gate signal Po is supplied to turn on the switch elements Tu, Tw, and Ty, which have been in the off state, for a period substantially equal to the predetermined period t, as indicated by broken lines in FIG. 3, thereby applying a reverse-phase voltage for canceling a current that flowed between the switching circuit and the motor M by initial turning on of the switch elements Tv, Tx, and Tz to the phase windings Lu, Lv, and Lw.

In this manner, application of the reverse-phase voltage before moving to the next U-phase check operation rapidly attenuates the phase current Iv during the V-phase check operation and prevents the phase current Iv from affecting the phase current Iu during the next U-phase check operation. As a result, accurate detection of the phase current Iu during the next U-phase check operation becomes possible.

Similarly, in the remaining U-phase, X-phase, Z-phase, and Y-phase check operations, a modification may include a configuration in which a reverse-phase voltage for canceling a current that flowed between the switching circuit and the motor M is applied to the phase windings Lu, Lv, and Lw.

That is, attenuation of each phase current during each phase check operation within a short time by application of the reverse-phase voltage for cancellation shortens the period of each phase check operation and enables accurate detection of the phase current during a subsequent phase check operation. In the final phase check operation, no further energization by a phase check operation occurs. Accordingly, application of the reverse-phase voltage is unnecessary.

The above embodiment has described the example in which the respective phase check operations are executed in the order of the W-phase check operation, the V-phase check operation, the U-phase check operation, the X-phase check operation, the Z-phase check operation, and the Y-phase check operation. The order is not limited to this example.

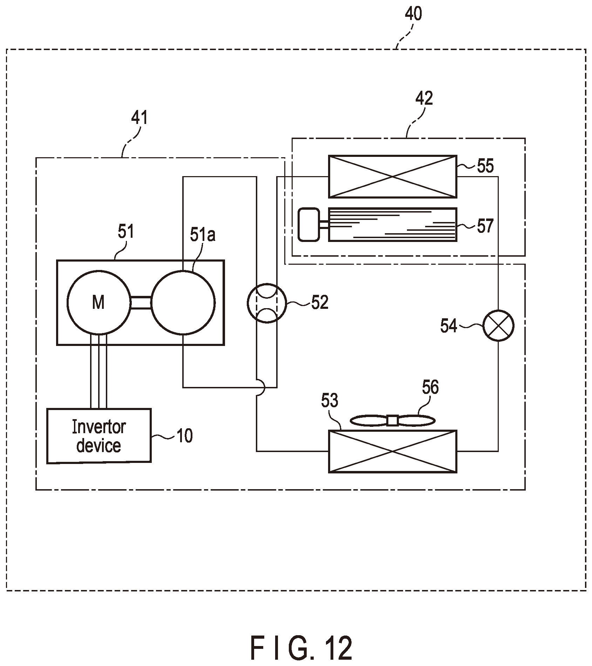

An application example of the above embodiment is a refrigeration cycle apparatus in which the inverter device 10 drives a compressor. FIG. 12 shows an air conditioner 40 including a heat pump refrigeration cycle as an example of the refrigeration cycle apparatus. The air conditioner 40 includes an outdoor unit 41 and an indoor unit 42. The outdoor unit 41 includes a compressor 51, a four-way valve 52, an outdoor heat exchanger 53, an expansion valve 54, an outdoor fan 56, and the inverter device 10 described in the above embodiments. The indoor unit 42 includes an indoor heat exchanger 55 and an indoor fan 57. The compressor 51 includes the motor M driven by the inverter device 10 and a compression mechanism 51a driven by the motor M.

During cooling operation, refrigerant discharged from the compression mechanism 51a flows through the four-way valve 52 to the outdoor heat exchanger 53 and condenses in the outdoor heat exchanger 53 by heat exchange with intake air (outdoor air) of the outdoor fan 56. The expansion valve 54 depressurizes the refrigerant condensed in the outdoor heat exchanger 53, and the refrigerant flows to the indoor heat exchanger 55, where the refrigerant evaporates by heat exchange with intake air (indoor air) of the indoor fan 57. The refrigerant evaporated in the indoor heat exchanger 55 flows through the four-way valve 52 to the compression mechanism 51a, which draws in the refrigerant. During heating operation, switching of the flow path of the four-way valve 52 causes refrigerant discharged from the compression mechanism 51a to flow through the four-way valve 52 to the indoor heat exchanger 55, where the refrigerant condenses by heat exchange with intake air (indoor air) of the indoor fan 57. The refrigerant condensed in the indoor heat exchanger 55 is depressurized by the expansion valve 54 and flows to the outdoor heat exchanger 53, where the refrigerant evaporates by heat exchange with intake air (outdoor air) of the outdoor fan 56. The refrigerant evaporated in the outdoor heat exchanger 53 flows through the four-way valve 52 and is drawn into the compression mechanism 51a.

The above embodiment and the above modification serve as examples and do not limit the scope of the invention. The above embodiment and the above modification are presented as examples and are not intended to limit the scope of the invention. The above embodiments and modifications are included within the gist of the invention and within the scope of the invention recited in the claims and the scope of equivalents thereof.

### Reference Signs List

1 ... AC power supply, 2 ... Full-wave rectifier circuit, 3 ... Smoothing capacitor, 10 ... Inverter device, 20 ... Switching circuit, Tu to Tz ... Switch elements, Rs ... Shunt resistor, M ... Motor, Lu, Lv, Lw ... Phase windings, 30 ... Controller, 30a ... Current detection section, 30b ... Voltage detection section, 30c ... Determination section, 30d ... First control section, 30e ... Second control section.

## Claims

1. An inverter device connected to a motor having a plurality of phase windings, comprising:
a switching circuit including a plurality of series circuits each including a switch element on an upstream side and a switch element on a downstream side along an application direction of a DC voltage, the respective phase windings being connected to interconnection points of the switch elements of the respective series circuits; and
a controller configured to control the switching circuit, wherein
the controller sequentially forms a plurality of conduction paths through which currents flow in predetermined directions in the respective phase windings through the respective switch elements and executes, for each formation, a phase check operation that detects a value of a phase current flowing between the switching circuit and the respective phase windings, and
the controller determines an abnormality of the motor and an abnormality of the respective switch elements based on a ratio between a maximum value and a minimum value among the values of the phase currents detected in the phase check operations.

2. The inverter device according to claim 1, further comprising:
a shunt resistor provided in a DC current path to the switching circuit, wherein
the controller detects the values of the phase currents during the respective phase check operations based on a voltage generated across the shunt resistor.

3. The inverter device according to claim 1,
wherein
the controller executes the determination before startup of the motor, starts the motor when a result of the determination indicates no abnormality, and
the controller inhibits startup of the motor when the result of the determination indicates an abnormality.

4. The inverter device according to claim 1, further comprising:
a DC circuit configured to convert an AC voltage into a DC voltage and supply the DC voltage to the switching circuit, wherein
the controller variably sets an on-period of the respective switch elements during the respective phase check operations according to a value of the AC voltage.

5. The inverter device according to claim 1,
wherein
the controller applies, before shifting to each phase check operation, a reverse-phase voltage for canceling a current flowing between the switching circuit and the motor to the respective phase windings through the respective switch elements.

6. A refrigeration cycle apparatus configured to drive a compressor by the inverter device according to any one of claim 1 to claim 5.
